# EUROPEAN PATENT SPECIFICATION

(11) **EP 1 869 963 B1**
(45) Date of publication and mention of the grant of the patent: **05.08.2015**
(21) Application number: 07011757.7
(22) Date of filing: 15.06.2007
(51) Int. Cl.: A01D 34/535, B02C 13/28

(54) **Apparatus for shredding a material**
Vorrichtung zum Zerkleinern eines Materials
Appareil pour déchiqueter un matériau

(30) Priority: 21.06.2006 IT BO20060483
(43) Date of publication of application: 26.12.2007
(73) Proprietor: Nobili S.p.A., 40062 Molinella (Bologna) (IT)
(72) Inventor: Rossi, Mario, 40062 Molinella (Bologna) (IT)
(74) Representative: Fanzini, Valeriano

(56) References cited:
- EP-A- 1 297 737
- EP-A- 1 570 718
- EP-A- 1 849 347
- DE-U1- 8 704 846
- FR-A- 2 370 420
- FR-A1- 2 804 577
- GB-A- 1 155 977
- GB-A- 2 157 548
- US-A- 3 527 038
- US-A- 5 733 385

## Description

This invention relates to an apparatus for shredding a material, in particular for shredding a plant material.

Especially in the agricultural field, prior art apparatuses for shredding plant materials, in particular grassy materials, comprise rotors equipped with shredding blades or hammers each taking the form of a metal element with a hole for the insertion of an articulation element or clevis. The clevis has a "spiralled" shape, that is to say, it is not flat, and is in turn articulated to a respective pin that is parallel to the axis of rotation of the rotor. The shredding blades or hammers of these prior art apparatuses are defined by a body of uniform width, that is to say, equally wide all along, from the extended part with the cutting edge to the part where it is attached to the clevis. The body is also relatively thick, which, besides improving the blade's shredding performance, also has the advantage of making it highly durable.

The disadvantage of these constant width blades, however, is that the cutting edge used for shredding is not very wide, which means that the apparatus must be fitted with a specially designed rotor that is strong and large enough to accommodate a multiplicity of blades and related mounting elements.

In prior art apparatuses, where the blade body has an articulation hole whose axis is substantially perpendicular to the line defined by the profile of the cutting edge, the rotor therefore has an excessively large number of protruding portions for mounting the shredding blades or hammers, making the cost of producing these shredding apparatuses exceedingly high.

US 5733385 discloses a blade for a flail type brush cutting machine which is torch cut or cast from thick metal in a generally L shape and comprises a lateral cutting edge. Moreover US 5733385 discloses a shredding element body of uniform width.

It has been therefore provided an apparatus for shredding a material, in particular plant material, especially grassy material, according to claim 1.

In this way, the perpendicularly articulated blade has a wider cutting edge, with the advantage of making it possible to reduce the number of shredding elements and related mounting elements.

These and other characteristics of the apparatus and of its components will become more apparent from the detailed description which follows, with reference to the accompanying drawings which illustrate preferred, non-limiting embodiments of it provided purely by way of example and in which:
- Figure 1 is a rear view of the preferred embodiment of the apparatus for shredding a plant material according to the invention, the apparatus being illustrated in a tractor-mounted condition;

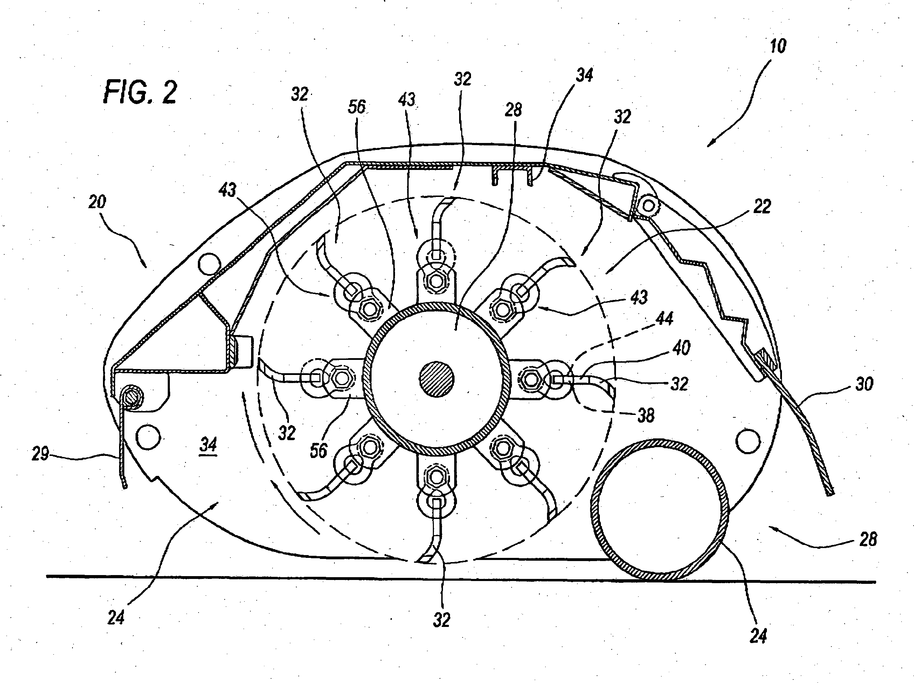

- Figure 2 is a longitudinal section of the preferred embodiment of the apparatus for shredding a plant material according to the invention;

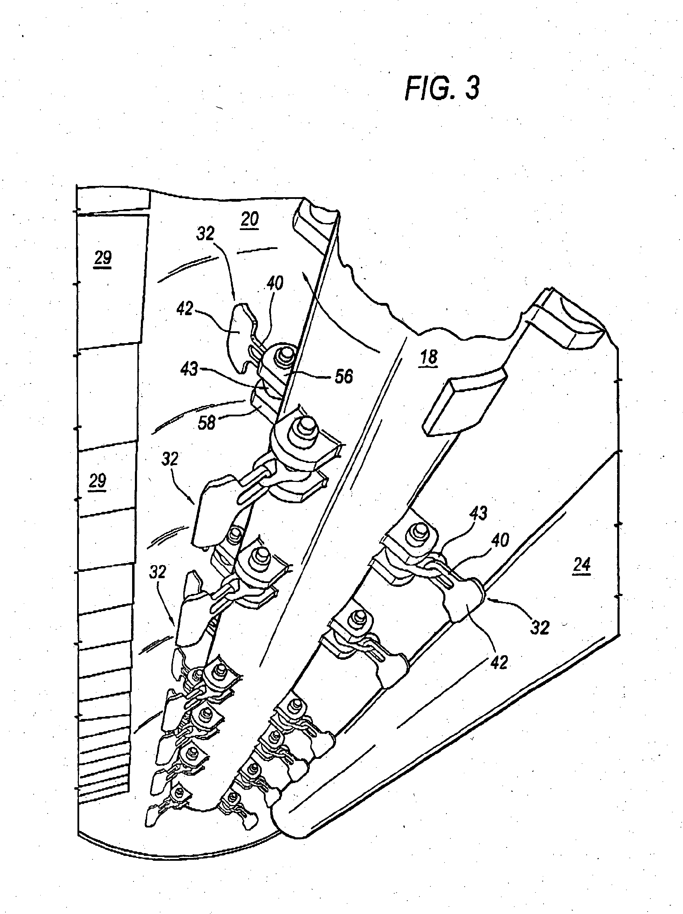

- Figure 3 is a perspective view from below of the preferred embodiment of the apparatus according to the invention;
- Figure 4 is a front view of a detail showing the shredding element of the preferred embodiment of the apparatus according to the invention;
- Figure 5 is similar to Figure 4 but shows the shredding element in a different working position;
- Figure 6 is a front view showing only the shredding element according to a first preferred embodiment;
- Figure 7 is a side view of the shredding element of Figure 6;
- Figure 8 is a cross section of the shredding element through line VIII-VIII of Figure 6;
- Figure 9 is a front view of a detail showing the articulation element of the shredding element according to the invention;
- Figure 10 is a side view of the element of Figure 9 by which the shredding element is articulated;
- Figures 11 to 13 illustrate the steps in the procedure for fitting the shredding element on the articulation element;
- Figure 14 is a front view of a second preferred embodiment of the shredding element according to the invention;
- Figure 15 is a side view of the second preferred embodiment of the shredding element according to the invention;
- Figure 16 is a cross section through line XVI-XVI of Figure 14 showing the second preferred embodiment of the element according to the invention;
- Figure 17 is a front view illustrating a detail of another embodiment of the apparatus mounting a third preferred embodiment of the shredding element according to the invention;
- Figure 18 is a side view of the detail of Figure 17 showing in particular the third preferred embodiment of the shredding element according to the invention.

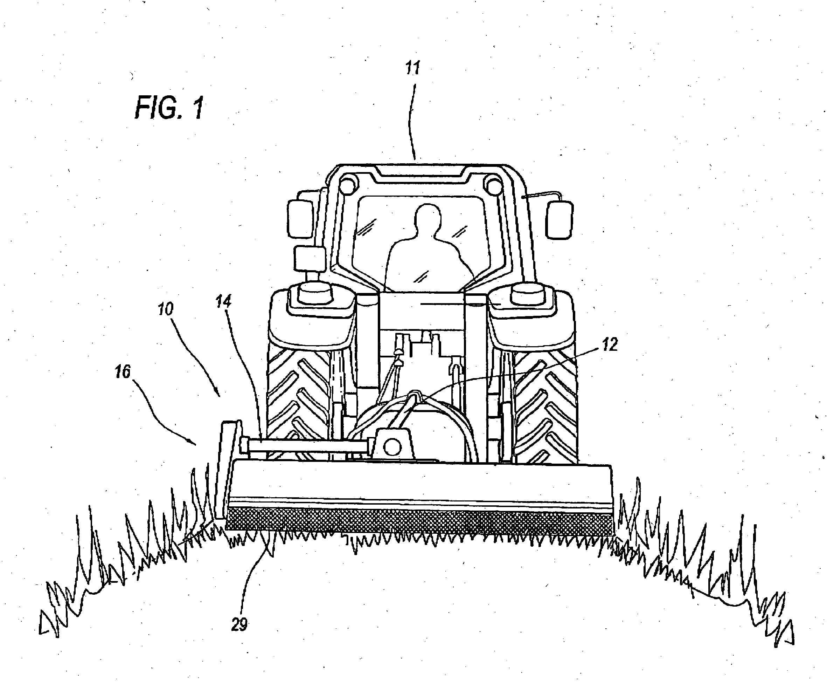

Figure 1 shows a preferred embodiment of the apparatus 10 for shredding a material, in particular plant material, especially grassy material. In particular, the apparatus according to the invention lends itself well to cutting the plant material present between rows of tree crops and for the maintenance of crop fields in general.

The apparatus, however, might also be used for cutting any other type of plant material, even of the type having relatively rigid stems.

Looking in more detail, as shown in Figure 1, present apparatus is preferably mounted at the back of a tractor 11, or the like, through which suitable drive shafts 12, 14 and respective belt drive systems 16 can transmit rotational motion to a rotor 18 mounted on a frame of the apparatus 20, defining a working chamber 22 within which the rotor 18 turns and which also houses a roller 24 that supports the apparatus. It will be understood, however, that the apparatus according to the invention might also be mounted at the front of the tractor.

When operating, the working chamber 22 is open at the front, at 24, and at the back, at 28, where elastic straps, labelled 30, are located. Other straps, preferably of metal, labelled 29, are located at the inlet opening leading into the shredding chamber.

The apparatus according to the invention comprises a plurality of shredding elements 32 articulated to the rotor 18 and cooperating with respective shearing means, labelled 34, in order to shred the material.

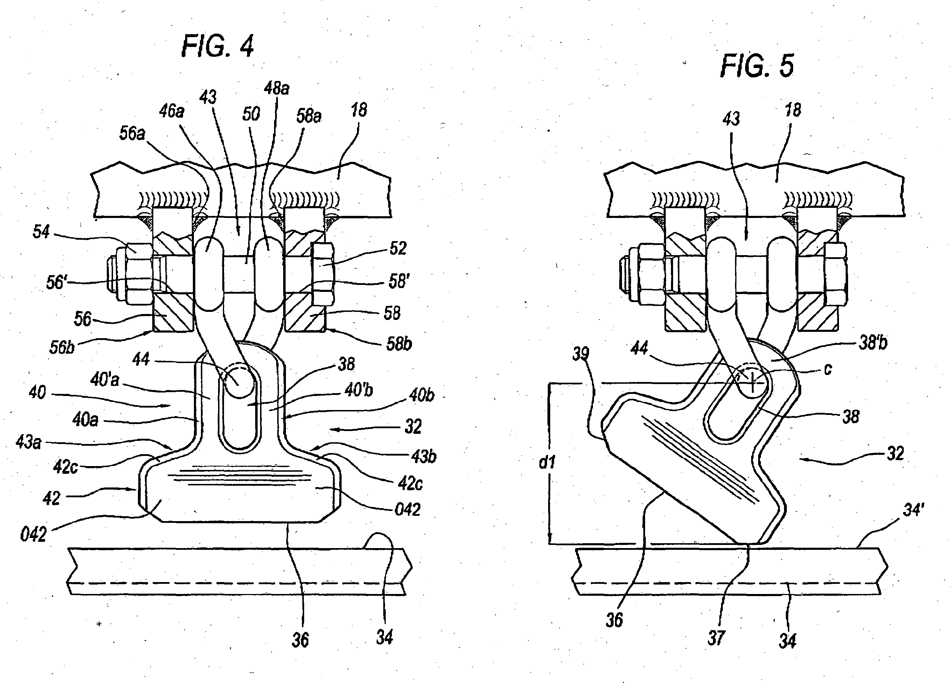

Looking in more detail, with reference in particular to Figures 4 to 8, each shredding element comprises a body 32 extending transversally and affording a profile or edge 36 for engaging and shredding the material at the end of the body 32 itself.

As illustrated, each shredding element 32 also comprises a hole 38 that enables the shredding element to pivot in a freely rotatable fashion about an axis which is substantially perpendicular to the body 32 of the shredding element itself.

As illustrated, this shredding element 32 takes the form of a flattened body having a portion 40, in which the perpendicular hole 38 is made, and an inclined portion 42 extending at an angle to the first portion 40 and comprising, or ending with, the profile 36 for engaging and shredding the material.

In practice, the bottom portion 42 is curved and protrudes from the plane defined by the portion 32, defining the perpendicular pivot hole 38.

Advantageously, as illustrated, this shredding element has a narrow portion 40, in which the perpendicular hole 38 is made, and a wide end portion 42 comprising, or ending with, the profile 36 for engaging and shredding the material.

Thus, the shredding element is well and easily supported and has a wide shredding width.

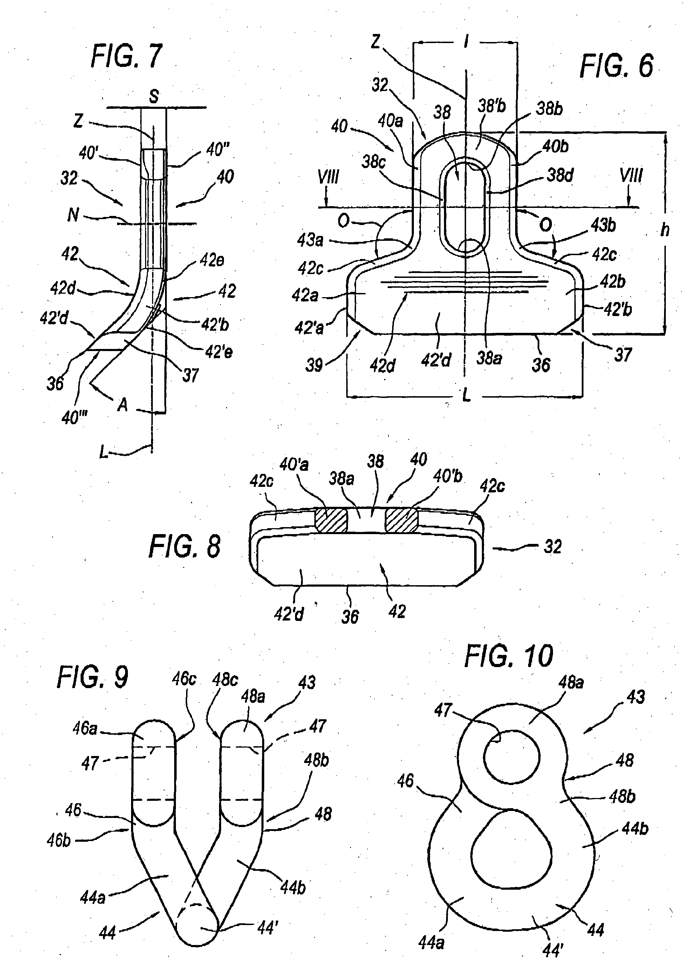

The thickness "S" of this shredding blade or flail is substantially uniform and, as shown clearly in Figure 7, at the lower end, the body 32 of the shredding element has a chamfer which enables the cutting profile 36 to be defined. In practice, the chamfer is such that the transversal edge 40''', at the cutting end of the shredding element makes an acute angle with the respective portion 42'd of the front face of the shredding element 32 itself.

For convenience of description, in Figures 7 and 8, the dot-dashed line labelled N represents the perpendicular axis of the articulation hole 38, while the dot-dashed line labelled Z represents a centre line through the body 32. The axis of symmetry Z and the perpendicular axis N of the articulation hole 38 are, as illustrated, substantially orthogonal to each other.

As may be inferred from Figure 6, the body 32 and, in particular, the cutting edge 36 of the shredding element, extend transversally of the line defined by the axis Z.

As illustrated, the wide end portion 42 has respective transversal ends 42a, 42b that extend transversally beyond respective lateral edges 40a, 40b of the articulation portion 40 of the shredding element.

Advantageously, the wide end portion 42 has a wide end portion 42c, opposite the cutting edge 36 that extends to or beyond a respective edge 38a of the perpendicular hole 38, that is to say, outside the hole 38.

Thus, the shredding element 32 can be conveniently fitted to a clevis or mounting and articulation element 43, as described in more detail below.

Advantageously, the edge 42c, opposite the cutting edge 36, extends at an angle, or obliquely, to the axis Z or to the line transversal to the axis Z, defining an angle "O" with the respective edges 40a, 40b of the perpendicular articulation portion 40, said angle being an obtuse angle.

The upper edge 42c of the portion 42 with the cutting edge is also advantageously radiused to the respective lateral edge of the articulation portion 40a, 40b through a respective arcuate section 43a, 43b having a relatively large curvature radius. This facilitates the sliding of the grassy material, preventing the material from sticking to this narrow part of the shredding element where, because it is damp, it would otherwise easily adhere and accumulate.

As illustrated, the wide end portion 42 has, at the opposite lateral ends of it, respective edges 37, 39, which are inclined and recessed with respect to the cutting end edge 36.

In this embodiment, the above mentioned lateral chamfers 37 and 39, make an angle of 45° with the cutting edge 36.

In this way, when the shredding element 32 meets a large obstacle such as a stone or the like and is inclined transversally or turns with respect to the articulation pin as shown in Figure 5, the distance between the centre of rotation "C" of the blade or flail 32 from the respective chamfered edge 37, 39 is such that the shredding element 32, although its respective chamfered edge 37 or 39 is at the counterblade 34, does not interfere with the counterblade or with corresponding surfaces of the containing frame but remains at a slight distance from it, as shown clearly in Figure 5.

In practice, the distance "d" from the centre of rotation "C" perpendicularly to the respective chamfered edge, as illustrated in Figure 5, is smaller than the distance "d1" from the same centre of rotation "C" to the working end edge 34' of the counterblade 34.

For this purpose, the width of the cutting edge 36 and the total width of the wide portion 42, that is to say, the size of the chamfers 37 and 39, is suitably calculated to avoid such interference between trajectories.

As illustrated, the articulation hole 38 takes the form of a slot extending along the line Z - that is to say, along the line perpendicular to the line along which the cutting edge 36 extends - the slot 38 having a lower curved, or outer, edge 38a, an upper curved, or inner, edge 38b, and opposite straight, or linear, edges 38c, 38d.

As will become more apparent below, the slot 38 advantageously allows the pivoting means of the shredding element 32 to be fitted.

It is advantageously contemplated the provision of a shredding element 32 mounting element that defines means for freely rotating the shredding element about an axis "C" perpendicular to the shredding element itself.

It is also advantageously contemplated the provision of a shredding element 32 mounting element 43 that defines means for freely rotating the shredding element about an axis parallel to the axis of rotation of the rotor 18.

As may be inferred, also with reference to Figures 9 and 10, the mounting and articulation element 43 of the shredding element 32 comprises a pin portion 44 designed to be inserted into the perpendicular hole 38 of the shredding element 32.

This pin portion 44 is a short straight portion extending between respective arcuate portions 44a, 44b with suitable curvature radius. In the accompanying drawings, the straight portion of the pin portion 44 is labelled 44'.

The arcuate portions 44a, 44b are connected to respective articulation portions parallel to the axis of the rotor and taking the form of opposite arms 46, 48 ending with respective annular portions 46a, 48a.

As may be inferred from Figure 4, the articulation element is supported by a pin 50 parallel to the axis of rotation of the rotor 18, or to the latter's outer surface, and being defined by a bolt 52 with a wide head and a respective lock nut 54.

The annular portions 46a, 48a have a respective inside surface 47 for insertion of the pin 50.

As may be inferred also with reference to Figure 9, the portions 46, 48 for articulation to the pin 50, parallel to the axis of the rotor, extend from the perpendicular portion 44 and diverge from each other, so that, when viewed from the front, they have a V-shaped transversal profile.

As may be inferred also with reference to Figure 10, the portions 46, 48 for articulation to the pin 50, parallel to the axis of the rotor, extend from the perpendicular portion 44 and converge at the shared articulation pin 50.

As illustrated, said hinging portions, or lateral arms, 46, 48 for connection to respective annular portions 46a, 48a take the form of respective linear portions.

This creates, as a whole, a mounting and articulation element 43 for the shredding element having a wide perpendicular hinging portion to the advantage of the movement that the shredding element, or blade, 32 can perform.

As illustrated, the invention contemplates the provision of portions 56, 58 that protrude radially from the rotor 18 and define respective holes 56', 58' into which the articulation pin 50 parallel to the axis of the rotor 18 can be inserted.

As illustrated, the wide end portion 42 of the shredding element 32 advantageously extends beyond the opposite, or inner, edges 56a, 58a of the mounting portions 56, 58. In this way, a large shredding surface is obtained.

Further, the wide end portion 42 of the shredding element 32 advantageously extends beyond the respective lateral, or outer, edges 56b, 58b of the respective mounting portions 56, 58. In this way, an even larger shredding surface is obtained.

Advantageously, the outer lateral edges 46b, 48b of the articulation arms of the mounting and articulation element 43 are spaced apart by a distance just smaller than the distance between the inner edges 56a, 58a of the radial mounting portions 56, 58.

Further, advantageously, the inner lateral edges 46c, 48c of the articulation arms of the mounting and articulation element 43 are spaced apart by a distance just greater than the distance between the respective outer edge 40a or 40b of the articulation portion of the shredding element and the respective inner edge 38c or 38d delimiting the perpendicular hole 38.

An articulation element 43 of reduced width is thus obtained, which enables this articulation pin to be fitted to rotors having radial mounting elements 56, 58 with any spacing, that is to say, to a plurality of existing rotors normally designed for use with other types of shredding blades or hammers different from those with the perpendicular articulation pin described herein.

As illustrated in particular in Figure 7, the wide portion 42 has opposite intermediate front and rear surfaces 42d and 42e, respectively, which are curved according to substantially the same curvature radius and from which there extend respective, substantially linear sections 42'd and 42'd.

Further, the perpendicular articulation portion 40 has front and rear faces 40' and 40" which are substantially planar and parallel to each other. As mentioned above and illustrated, the wide portion 42 is inclined with its respective front and rear faces 42'd and 42'e at an angle to the articulation portion 40.

In addition, the wide portion 42 takes the form of a generally quadrangular portion whose lateral edges 42'a and 42'b are parallel to the lateral edges 40a, 40b of the perpendicular articulation portion 40 and perpendicular to the cutting edge 36.

Advantageously, the width "L" of the wide portion 42 is more than twice the width "1" of the perpendicular articulation portion 40, thus affording a particularly wide cutting edge.

The reference character "h" in Figure 6 denotes the total height of the shredding element 32. More specifically, the height of the wide portion 42 is less than the height of the perpendicular articulation portion 40 but more than half the height of the perpendicular articulation portion 40.

Also, as illustrated, the wide end portion 42 extends at an angle "A" to the perpendicular articulation portion 40, protruding from the plane defined by the perpendicular articulation portion 40.

As illustrated, the lateral edges of the wide portion are parallel to the lateral edges 40a, 40b of the perpendicular articulation portion 40.

According to another aspect, the perpendicular articulation portion 40 comprises a first and a second upright element 40'a and 40'b, which are parallel to each other and protrude from the portion 42 with the cutting edge 36 and which, at the end opposite the latter, are connected by an arcuate retaining crossbar 38'b that is convex on the side opposite the cutting edge 36 of the blade.

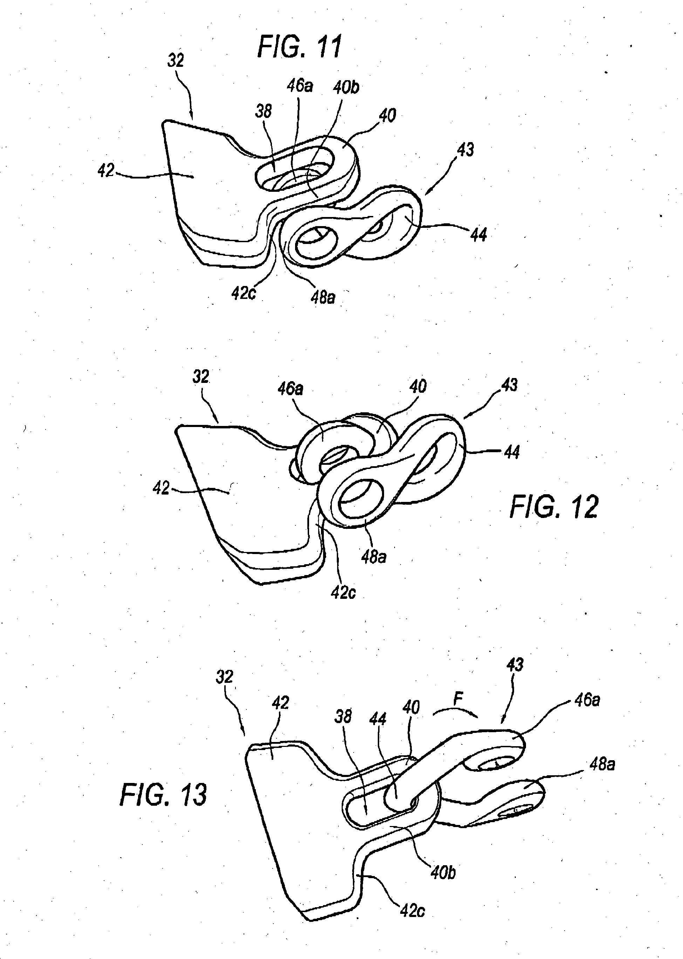

Figures 11 to 13 illustrate the steps of fitting the shredding element or flail 32 on the mounting and articulation element 43.

As illustrated in Figure 11, the blade or flail 32 shaped in this way allows an annular articulation portion 46a of the element 43 to be inserted into the perpendicular slot or hole 38, with the other annular articulation portion 48a of the articulation element 43 positioned on the outer side of, and slightly spaced from, the upright element 40'b of the portion 40.

At this stage in the procedure of fitting the shredding element on the respective articulation element, the advantageous shape of the shredding element enables the ring 48a of the articulation element 43 to remain spaced from the wide portion 42, in particular from the upper, or radially inner, edge 42c of the wide portion.

This enables the annular portions 48a and 48b of the shredding element 42 to pass freely to the other side of the respective upright 40'b of the articulation portion 40, as shown also in Figure 12.

Lastly, by the movement indicated by the arrow F, the configuration illustrated in Figure 13 is obtained, where the perpendicular portion 44 is fully inserted into the hole 38 of the shredding flail 32 in such a way that its upper, or radially inner, edge rests freely on the upper, or radially inner, edge 38b of the articulation slot 38.

In practice, the end portion 42 with the cutting edge has an edge 42c facing the direction of the articulation portion 40 and positioned relative to the respective edge of the articulation hole 38 in such a way as to allow the passage of the corresponding portion 48a of the articulation element 43.

The shredding element 32 in the embodiment described takes the form of a relatively heavy, compact body with a thickness "S" preferably equal to 10 mm. The thickness may, however, be modified as required to obtain a blade 32 of any desired weight.

The shredding blade 32 is preferably 79.5 mm long and 90 mm wide at its widest portion 42, with chamfers 37, 39 10 mm wide and articulation portion 40 of 40 mm wide. These dimensions, although preferred, may be modified according to specific requirements.

Also, the angle A between the wide portion 42 and the slotted radial portion 40 is around 45°.

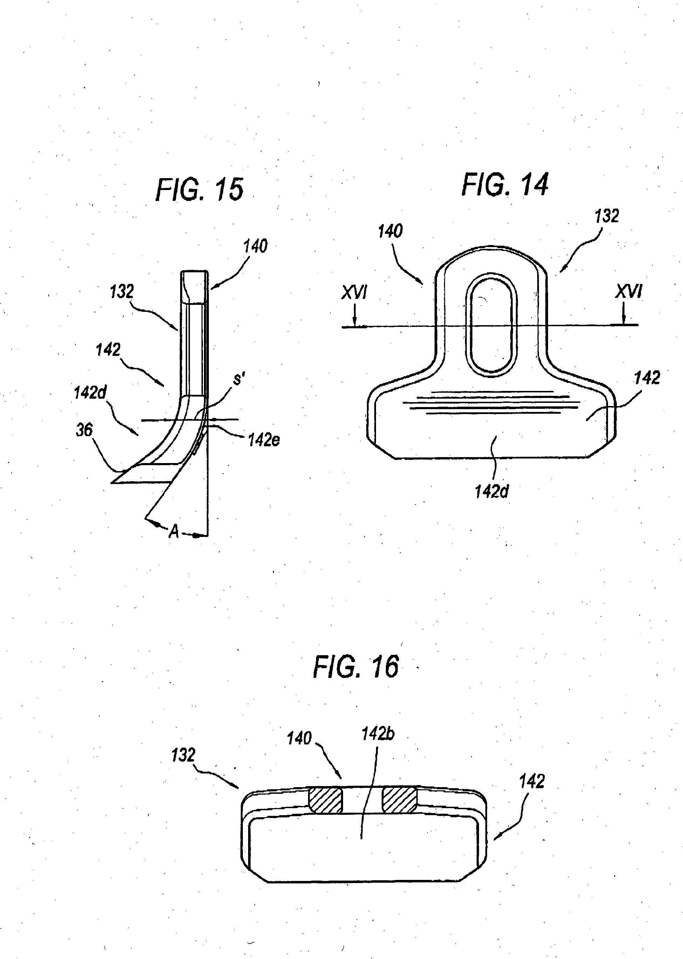

Figures 14 to 16 illustrate a second preferred embodiment 132 of a shredding element.

This second preferred embodiment of shredding element is substantially the same as the first preferred embodiment 32, except that the end portion 142 with the cutting edge is variable in width, or, more specifically, gradually increases in width towards the cutting edge 36.

The shredding element or flail thus obtained is heavier and more resistant and can therefore be used to shred thicker and considerably more solid plant material.

More specifically, the wide portion 142 has opposite front and rear surfaces 142d and 142e, which are curved according to different curvature radiuses, the rear surface 142e having the larger curvature radius.

In this second preferred embodiment, the angle "A" between the rear face of the wide portion 142 and the rear face of the perpendicular slotted portion 140 is around 35°.

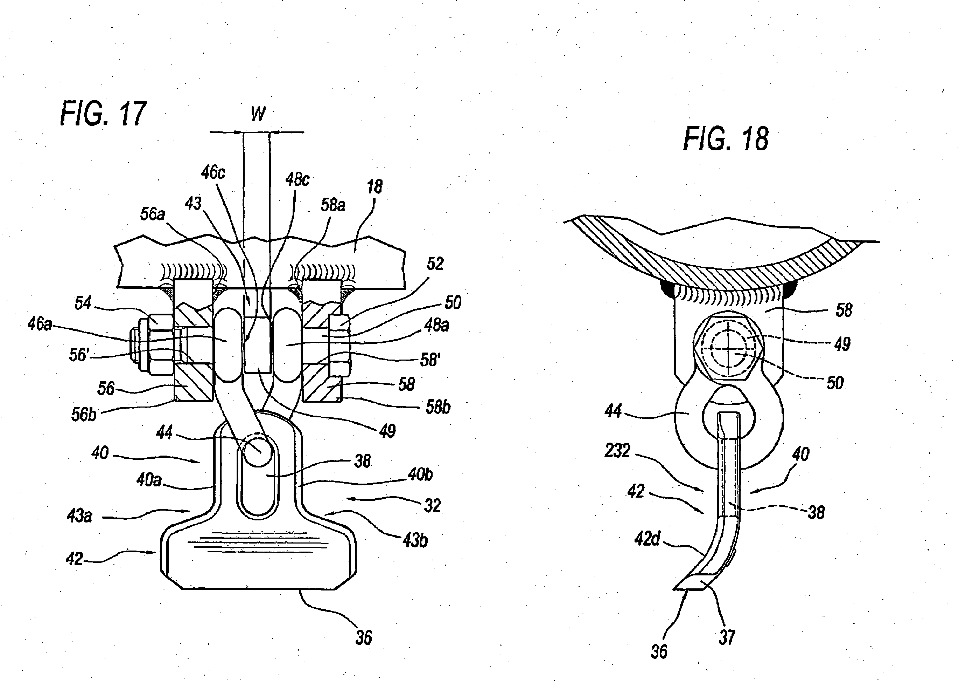

Figures 17 and 18 illustrate a detail of another preferred embodiment of the apparatus according to the invention that uses a third preferred embodiment 232 of the shredding element.

This further preferred embodiment of the apparatus is substantially the same as the first preferred embodiment 32 and the components that are the same as those of the first preferred embodiment described are denoted by the same reference numbers.

In this further preferred embodiment of the apparatus, between the portions 46, 48 for articulation with respect to a pin 50 parallel to the rotor axis, means 49 are provided for keeping said articulation portions 46, 48 spaced from each other.

More specifically, as illustrated, the means for keeping the articulation portions spaced from each other take the form of an annular element 49, positioned on the articulation pin 50, the pin 50 being coaxially inserted into it.

The spacer 50 has a suitable width "W" which is slightly smaller than the distance between the opposite inside faces 46c, 48c of the annular pivoting elements 46a, 48a of the metal articulation element 43.

The shredding blade 232 is preferably 100 mm wide at its widest portion 42, thus extending the cutting width and enabling improved shredding efficiency.

This embodiment is well suited for use on existing rotors designed to be fitted with other types of shredding blades. The plurality of blades mounted on the rotor define, in their entirety, a uniform cutting surface parallel to the axis of rotation, that is to say, a surface without parts that are not covered by at least one blade when the rotor is in operation.

The shredding elements and the mounting and articulation elements are made of metal and obtained by casting in suitable moulds.

With reference in particular to Figure 4, it has been therefore provided an advantageous shredding element having a mounting portion 40 beside which there protrudes a respective transversal extension portion 042, 042 having at its free end, opposite the mounting portion 40, a cutting edge 36.

The invention described above is susceptible of industrial application and may be modified and adapted in several ways without thereby departing from the scope of the invention as defined by the claims.

## Claims

1. An apparatus (10) for shredding a material, in particular plant material, especially grassy material,
the apparatus comprising a rotor (18) with a plurality of shredding elements (32) mounted in articulated manner on the rotor (18) and cooperating with respective shearing means (34) in order to shred the material,
the apparatus being **characterised in that** the body (32) of the shredding element comprises an articulation narrow portion (40) and a wide end portion (42) having respective transversal ends (42a, 42b) that extend transversally beyond respective lateral edges (40a, 40b) of the articulation narrow portion (40) of the shredding element; **in that**
the articulation narrow portion of the shredding element (32) has a hole (38) by which the shredding element is pivoted about an axis that is substantially perpendicular to the body (32) of the shredding element itself; and **in that** said wide end portion (42) affording an extending transversally edge (36) for engaging and shredding the material provided at the end of the body (32) itself.

2. The apparatus according to claim 1, **characterised in that** the shredding element comprises a cutting end portion (42) having an edge (42c), opposite the cutting edge (36), which extends substantially transversally of the edge (38a) of the articulation hole (38).

3. The apparatus according to any of the foregoing claims, **characterised in that** the shredding element comprises a cutting end portion (42) having an edge (42c), opposite the cutting edge (36), which makes an obtuse angle with the lateral edges (40a, 40b) of the perpendicular articulation narrow portion (40) of the shredding element.

4. The apparatus according to any of the foregoing claims, **characterised in that** the wide end portion (42), at the respective transversal end, has a corresponding edge (37, 39) which is inclined and recessed with respect to the cutting end edge (36).

5. The apparatus according to claim 4, **characterised in that** the edge (37, 39) which is inclined and recessed with respect to the cutting edge (36) makes a respective angle with the cutting edge (36).

6. The apparatus according to claim 4 or 5, **characterised in that** the recessed edge (37, 39) is inclined with respect to the cutting edge (36) at an angle of around 45°.

7. The apparatus according to any of the foregoing claims, **characterised in that** the articulation hole (38) takes the form of a slot extending lengthways along the body of the shredding element (32).

8. The apparatus according to claim 3, **characterised in that** the edge (42c) of the cutting end wide portion (42) is radiused to the respective lateral edge of the articulation narrow portion through an arcuate section (43a, 43b).

9. The apparatus according to any of the foregoing claims, **characterised in that** it comprises a shredding element (32) mounting element (43) that defines means for freely rotating the shredding element about an axis (C) perpendicular to the shredding element (32) itself.

10. The apparatus according to any of the foregoing claims, **characterised in that** it comprises a shredding element (32) mounting element (43) that defines means for freely rotating the shredding element about an axis parallel to the axis of the rotor (18).

11. The apparatus according to claim 9 or 10, **characterised in that** mounting and articulation element (43) of the shredding element (32) comprises a pin portion (44) designed to be inserted into the perpendicular hole (38) of the shredding element (32).

12. The apparatus according to any of the foregoing claims from 9 to 11, **characterised in that** the mounting and articulation element (43) comprises corresponding arm portions (46, 48) for articulation with respect to an articulation pin (50) parallel to the rotor axis.

13. The apparatus according to claim 12, **characterised in that** it comprises means (49) for keeping the arm portions (46, 48) spaced from each other.

14. The apparatus according to claim 13, **characterised in that** the means for keeping the articulation portions spaced from each other take the form of a spacer element (49) mounted on the articulation pin (50).

15. The apparatus according to claim 13 or 14, **characterised in that** the means for keeping the articulation portions spaced from each other take the form of an annular element (49) fitted around the articulation pin (50).

16. The apparatus according to any of the foregoing claims, **characterised in that** it comprises mounting portions (56, 58) protruding radially from the rotor (18).

17. The apparatus according to claim 16, **characterised in that** the wide end portion (42) of the shredding element (32) extends transversally beyond the respective inner edge (56a, 58a) of the respective mounting portion (56, 58). '

18. The apparatus according to claim 16 or 17, **characterised in that** the wide end portion (42) of the shredding element (32) extends transversally beyond the respective outer edge (56b, 58b) of the respective mounting portion (56, 58).

19. The apparatus according to any of the foregoing claims, **characterised in that** the wide end portion (42, 142) extends from the plane defined by the articulation narrow portion (40).

20. The apparatus according to any of the foregoing claims, **characterised in that** the wide end portion (42, 142) has opposite front and rear curved surfaces (42e, 42d); and **in that** the wide end portion (42) has opposite front and rear surfaces (42e, 42d), which are curved according to substantially the same curvature radius.

21. The apparatus according to any of the foregoing claims, **characterised in that** the articulation narrow portion (40) has front and rear faces (40', 40") which are substantially planar and parallel to each other.

22. The apparatus according to any of the foregoing claims, **characterised in that** the wide end portion (42) has respective lateral edge (42'a, 42'b) perpendicular to the cutting edge (36).

23. The apparatus according to any of the foregoing claims, **characterised in that** the wide end portion (42) respective lateral edge (42'a, 42'b) is parallel to the lateral edge (40a, 40b) of the articulation narrow portion (40).

24. The apparatus according to any of the foregoing claims, **characterised in that** the wide end portion (42) has a width (L) that is more than twice the width (1) of the articulation narrow portion (40).

25. The apparatus according to any of the foregoing claims, **characterised in that** the wide end portion (42) is inclined at an angle (A) to the articulation narrow portion (40).

26. The apparatus according to any of the foregoing claims, **characterised in that** the shredding element (32) has a uniform thickness (S).

27. The apparatus according to any of the foregoing claims, **characterised in that** the cutting end wide portion (42) has an edge (42c) which extends relative to the respective edge of the articulation hole (38) in a position such as to allow the passage of the corresponding portion (48a) of an articulation element (43).

## Patentansprüche

1. Vorrichtung (10) zum Zerkleinern eines Materials, insbesondere eines Pflanzenmaterials, vor allem Grasmaterial, wobei die Vorrichtung einen Rotor (18) umfasst, der mit einer Vielzahl an Zerkleinerungselementen (32) versehen ist, die auf dem Rotor (18) angelenkt sind und mit jeweiligen Schneidmitteln (34) zusammenwirken, um das Material zu zerkleinern, wobei die Vorrichtung **dadurch gekennzeichnet ist, dass** der Körper (32) des Zerkleinerungselements einen schmalen Gelenkabschnitt (40) und einen breiten Endabschnitt (42), der jeweilige sich quer über die jeweiligen seitlichen Kanten (40a, 40b) des schmalen Gelenkabschnitts (40) des Zerkleinerungselements erstreckende Querenden (42a, 42b) aufweist, umfasst; dass der schmale Gelenkabschnitt des Zerkleinerungselements (32) eine Bohrung (38) aufweist, durch die das Zerkleinerungselement um eine Achse schwenkbar ist, die im Wesentlichen senkrecht zum Körper (32) des Zerkleinerungselements ist; und dass der breite Endabschnitt (42) eine sich quer erstreckende Kante (36) ausbildet, um das am Ende des Körpers (32) bereitgestellte Material einzugreifen und zu zerkleinern.

2. Vorrichtung nach Anspruch 1, **dadurch gekennzeichnet, dass** das Zerkleinerungselement einen Schneidendabschnitt (42) umfasst, der eine der Schneidkante (36) gegenüberliegende Kante (42c) aufweist, die sich im Wesentlichen quer zur Kante (38a) der Gelenkbohrung (38) erstreckt.

3. Vorrichtung nach einem der vorhergehenden Ansprüche, **dadurch gekennzeichnet, dass** das Zerkleinerungselement einen Schneidendabschnitt (42) mit einer der Schneidkante (36) gegenüberliegenden Kante (42c) umfasst, die mit der seitlichen Kanten (40a, 40b) des senkrechten schmalen Gelenkabschnitts (40) des Zerkleinerungselements einen stumpfen Winkel einschließt.

4. Vorrichtung nach einem der vorhergehenden Ansprüche, **dadurch gekennzeichnet, dass** der breite Endabschnitt (42) am jeweiligen Querende eine entsprechende Kante (37, 39) aufweist, die zur Schneidendkante (36) geneigt und zurückgesetzt ist.

5. Vorrichtung nach Anspruch 4, **dadurch gekennzeichnet, dass** die zur Schneidkante (36) geneigte und zurückgesetzte Kante (37, 39) mit der Schneidkante (36) einen jeweiligen Winkel einschließt.

6. Vorrichtung nach Anspruch 4 oder 5, **dadurch gekennzeichnet, dass** die zurückgesetzte Kante (37, 39) zur Schneidkante (36) in einem Winkel von etwa 45° geneigt ist.

7. Vorrichtung nach einem der vorhergehenden Ansprüche, **dadurch gekennzeichnet, dass** die Gelenkbohrung (38) die Form einer Schlitze annimmt, die sich der Länge nach entlang dem Körper des Zerkleinerungselements (32) erstreckt.

8. Vorrichtung nach Anspruch 3, **dadurch gekennzeichnet, dass** die Kante (42c) des breiten Schneidendabschnitts (42) durch ein krummes Teil (43a, 43b) zur jeweiligen seitlichen Kante des schmalen Gelenkabschnitts abgerundet ist.

9. Vorrichtung nach einem der vorhergehenden Ansprüche, **dadurch gekennzeichnet, dass** sie ein Befestigungselement (43) zum Befestigen des Zerkleinerungselements (32) umfasst, das Mittel zum freien Drehen des Zerkleinerungselements um eine zum Zerkleinerungselement (32) senkrechte Achse (C) definiert.

10. Vorrichtung nach einem der vorhergehenden Ansprüche, **dadurch gekennzeichnet, dass** sie ein Befestigungselement (43) zum Befestigen des Zerkleinerungselements (32) umfasst, das Mittel zum freien Drehen des Zerkleinerungselements um eine zur Achse des Rotors (18) parallele Achse definiert.

11. Vorrichtung nach Anspruch 9 oder 10, **dadurch gekennzeichnet, dass** das Befestigungs- und Gelenkelement (43) des Zerkleinerungselements (32) einen Stiftabschnitt (44) umfasst, der dazu bestimmt ist, in die senkrechte Bohrung (38) des Zerkleinerungselements (32) eingefügt zu werden.

12. Vorrichtung nach einem der vorhergehenden Ansprüche 9 bis 11, **dadurch gekennzeichnet, dass** das Befestigungs- und Gelenkelement (43) entsprechende Armabschnitte (46, 48) zum Gelenken in Bezug auf einen Gelenkstift (50) parallel zur Rotorachse umfasst.

13. Vorrichtung nach Anspruch 12, **dadurch gekennzeichnet, dass** sie Mittel (49) zum Aufstellen der Armabschnitte (46, 48) voneinander in einem bestimmten Abstand umfasst.

14. Vorrichtung nach Anspruch 13, **dadurch gekennzeichnet, dass** die Mittel zum Aufstellen der Gelenkabschnitte voneinander in einem bestimmten Abstand die Form eines auf dem Gelenkstift (50) montierten Abstandselements (49) annehmen.

15. Vorrichtung nach Anspruch 13 oder 14, **dadurch gekennzeichnet, dass** die Mittel zum Aufstellen der Gelenkabschnitte voneinander in einem bestimmten Abstand die Form eines um den Gelenkstift (50) angebrachten Ringelements (49) annehmen.

16. Vorrichtung nach einem der vorhergehenden Ansprüche, **dadurch gekennzeichnet, dass** sie Befestigungsabschnitte (56, 58) umfasst, die radial vom Rotor (18) hervorstehen.

17. Vorrichtung nach Anspruch 16, **dadurch gekennzeichnet, dass** der breite Endabschnitt (42) des Zerkleinerungselements (32) sich quer über die jeweiligen inneren Kante (56a, 58a) des jeweiligen Befestigungsabschnitts (56, 58) erstreckt.

18. Vorrichtung nach Anspruch 16 oder 17, **dadurch gekennzeichnet, dass** der breite Endabschnitt (42) des Zerkleinerungselements (32) sich quer über die jeweiligen äußeren Kante (56b, 58b) des jeweiligen Befestigungsabschnitts (56, 58) erstreckt.

19. Vorrichtung nach einem der vorhergehenden Ansprüche, **dadurch gekennzeichnet, dass** der breite Endabschnitt (42, 142) sich von der Ebene, die durch den schmalen Gelenkabschnitt (40) definiert ist, erstreckt.

20. Vorrichtung nach einem der vorhergehenden Ansprüche, **dadurch gekennzeichnet, dass** der breite Endabschnitt (42, 142) gebogene gegenüberliegende Vorder- und Rückoberflächen (42e, 42d) aufweist; und dass der breite Endabschnitt (42) gegenüberliegende Vorder- und Rückoberflächen (42e, 42d) aufweist, die nach im Wesentlichen demselben Radius gebogen sind.

21. Vorrichtung nach einem der vorhergehenden Ansprüche, **dadurch gekennzeichnet, dass** der schmale Gelenkabschnitt (40) Vorder- und Rückseiten (40', 40") aufweist, die im Wesentlichen eben und parallel zueinander sind.

22. Vorrichtung nach einem der vorhergehenden Ansprüche, **dadurch gekennzeichnet, dass** der breite Endabschnitt (42) eine jeweilige zur Schneidkante (36) senkrechte seitliche Kante (42'a, 42'b) aufweist.

23. Vorrichtung nach einem der vorhergehenden Ansprüche, **dadurch gekennzeichnet, dass** die jeweilige seitliche Kante (42'a, 42'b) des breiten Endabschnitts (42) parallel zur seitlichen Kante (40a, 40b) des schmalen Gelenkabschnitts (40) ist.

24. Vorrichtung nach einem der vorhergehenden Ansprüche, **dadurch gekennzeichnet, dass** der breite Endabschnitt (42) eine Breite (L) aufweist, die über doppelt so groß ist wie die Breite (l) des schmalen Gelenkabschnitts (40).

25. Vorrichtung nach einem der vorhergehenden Ansprüche, **dadurch gekennzeichnet, dass** der breite Endabschnitt (42) zum schmalen Gelenkabschnitt (40) in einem Winkel (A) geneigt ist.

26. Vorrichtung nach einem der vorangehenden Ansprüche, **dadurch gekennzeichnet, dass** das Zerkleinerungselement (32) eine gleichförmige Dicke (S) aufweist.

27. Vorrichtung nach einem der vorhergehenden Ansprüche, **dadurch gekennzeichnet, dass** der breite Schneidendabschnitt (42) eine Kante (42c) aufweist, die sich zur jeweiligen Kante der Gelenkbohrung (38) an einer Position erstreckt, sodass sie den Durchgang des entsprechenden Abschnitts (48a) eines Gelenkelements (43) ermöglicht.

## Revendications

1. Appareil (10) pour déchiqueter un matériau, en particulier un matériau végétal, spécifiquement un matériau herbacé, l'appareil comprenant un rotor (18) doté d'une pluralité d'éléments destinés à déchiqueter (32) montés de façon articulée sur le rotor (18) et coopérant avec des moyens de tranchage respectifs (34) afin de déchiqueter le matériau, l'appareil étant **caractérisé en ce que** le corps (32) de l'élément destiné à déchiqueter comprend une partie rétrécie d'articulation (40) ainsi qu'une partie terminale large (42) ayant des extrémités transversales respectives (42a, 42b) qui se développent transversalement au-delà des bords latéraux respectifs (40a, 40b) de la partie rétrécie d'articulation (40) de l'élément destiné à déchiqueter; **en ce que** la partie rétrécie d'articulation de l'élément destiné à déchiqueter (32) possède un orifice (38) par lequel l'élément destiné à déchiqueter est monté pivotant autour d'un axe étant substantiellement perpendiculaire au corps (32) de l'élément destiné à déchiqueter lui-même; et **en ce que** ladite partie terminale large (42) présente un bord (36) se développant transversalement pour engager et déchiqueter le matériau fourni à l'extrémité du corps (32) lui-même.

2. Appareil selon la revendication 1, **caractérisé en ce que** l'élément destiné à déchiqueter comprend une partie terminale de coupe (42) ayant un bord (42c), opposé au bord de coupe (36), qui se développe substantiellement transversalement du bord (38a) de l'orifice d'articulation (38).

3. Appareil selon l'une quelconque des revendications précédentes, **caractérisé en ce que** l'élément destiné à déchiqueter comprend une partie (42) ayant un bord (42c), opposé au bord de coupe (36), faisant un angle obtus avec les bords latéraux (40a, 40b) de la partie rétrécie d'articulation perpendiculaire (40) de l'élément destiné à déchiqueter.

4. Appareil selon l'une quelconque des revendications précédentes, **caractérisé en ce que** la partie terminale large (42), au niveau de l'extrémité transversale respective, possède un bord (37, 39) correspondant qui est incliné et renfoncé par rapport au bord terminal de coupe (36).

5. Appareil selon la revendication 4, **caractérisé en ce que** le bord (37, 39) qui est incliné et renfoncé par rapport au bord de coupe (36) fait un angle respectif avec le bord de coupe (36).

6. Appareil selon les revendications 4 ou 5, **caractérisé en ce que** le bord renfoncé (37, 39) est incliné par rapport au bord de coupe (36) à un angle d'environ 45°.

7. Appareil selon l'une quelconque des revendications précédentes, **caractérisé en ce que** l'orifice d'articulation (38) prend la forme d'une fente se développant dans le sens de la longueur le long du corps de l'élément destiné à déchiqueter (32).

8. Appareil selon la revendication 3, **caractérisé en ce que** le bord (42c) de la partie terminale large de coupe (42) est arrondie par rapport au bord latéral respectif de la partie rétrécie d'articulation par une section arquée (43a, 43b).

9. Appareil selon l'une quelconque des revendications précédentes, **caractérisé en ce qu'**il comprend un élément de montage (43) de l'élément destiné à déchiqueter (32) qui définit des moyens destinés à faire tourner librement l'élément destiné à déchiqueter autour d'un axe (C) perpendiculaire à l'élément destiné à déchiqueter (32) lui-même.

10. Appareil selon l'une quelconque des revendications précédentes, **caractérisé en ce qu'**il comprend un élément de montage (43) de l'élément destiné à déchiqueter (32) qui définit des moyens servant à faire tourner librement l'élément destiné à déchiqueter autour d'un axe parallèle à l'axe du rotor (18).

11. Appareil selon les revendications 9 ou 10, **caractérisé en ce que** l'élément de montage et d'articulation (43) de l'élément destiné à déchiqueter (32) comprend une section à pivot (44) conçue pour être insérée dans l'orifice perpendiculaire (38) de l'élément destiné à déchiqueter (32).

12. Appareil selon l'une quelconque des revendications précédentes de 9 à 11, **caractérisé en ce que** l'élément de montage et d'articulation (43) comprend des parties de bras (46, 48) correspondantes servant à l'articulation par rapport à un pivot d'articulation (50) parallèle à l'axe du rotor.

13. Appareil selon la revendication 12, **caractérisé en ce qu'**il comprend des moyens (49) servant à maintenir les parties de bras (46, 49) espacées les unes des autres.

14. Appareil selon la revendication 13, **caractérisé en ce que** les moyens servant à maintenir les parties d'articulation espacées les unes des autres prennent la forme d'un élément intermédiaire (49) monté sur le pivot d'articulation (50).

15. Appareil selon les revendications 13 ou 14, **caractérisé en ce que** les moyens servant à maintenir les parties d'articulation espacées les unes des autres prennent la forme d'un élément annulaire (49) monté autour du pivot d'articulation (50).

16. Appareil selon l'une quelconque des revendications précédentes, **caractérisé en ce qu'**il comprend des parties de montage (56, 58) dépassant radialement du rotor (18).

17. Appareil selon la revendication 16, **caractérisé en ce que** la partie terminale large (42) de l'élément destiné à déchiqueter (32) se développe transversalement au-delà du bord interne respectif (56a, 58a) de la partie de montage respective (56, 58).

18. Appareil selon les revendications 16 ou 17, **caractérisé en ce que** la partie terminale large (42) de l'élément destiné à déchiqueter (32) se développe transversalement au-delà du bord externe respectif (56b, 58b) de la partie de montage respective (56, 58).

19. Appareil selon l'une quelconque des revendications précédentes, **caractérisé en ce que** la partie terminale large (42, 142) se développe à partir du plan défini par la partie rétrécie d'articulation (40).

20. Appareil selon l'une quelconque des revendications précédentes, **caractérisé en ce que** la partie terminale large (42, 142) possède des surfaces courbes avant et arrière opposées (42e, 42d); et **en ce que** la partie terminale large (42) possède des surfaces avant et arrière opposées (42e, 42d) qui sont courbes selon substantiellement le même rayon de courbure.

21. Appareil selon l'une quelconque des revendications précédentes, **caractérisé en ce que** la partie rétrécie d'articulation (40) possède des faces avant et arrière (40', 40") étant substantiellement planaires et parallèles réciproquement.

22. Appareil selon l'une quelconque des revendications précédentes, **caractérisé en ce que** la partie terminale large (42) possède un bord latéral respectif (42'a, 42'b) perpendiculaire au bord de coupe (36).

23. Appareil selon l'une quelconque des revendications précédentes, **caractérisé en ce que** le bord latéral respectif (42'a, 42'b) de la partie terminale large (42) est parallèle au bord latéral (40a, 40b) de la partie rétrécie d'articulation (40).

24. Appareil selon l'une quelconque des revendications précédentes, **caractérisé en ce que** la partie terminale large (42) possède une largeur (L) étant supérieure à deux fois la largeur (1) de la partie rétrécie d'articulation (40).

25. Appareil selon l'une quelconque des revendications précédentes, **caractérisé en ce que** la partie terminale large (42) est inclinée selon un angle (A) par rapport à la partie rétrécie d'articulation (40).

26. Appareil selon l'une quelconque des revendications précédentes, **caractérisé en ce que** l'élément destiné à déchiqueter (32) possède une épaisseur uniforme (S).

27. Appareil selon l'une quelconque des revendications précédentes, **caractérisé en ce que** la partie terminale large de coupe (42) possède un bord (42c) qui se développe par rapport au bord respectif de l'orifice d'articulation (38) dans une position qui permette le passage de la partie correspondante (48a) d'un élément d'articulation (43).
